## Europäisches Patentamt

## European Patent Office

## Office européen des brevets

(11) Veröffentlichungsnummer: **0 009 141**
**B1**

(12) **EUROPÄISCHE PATENTSCHRIFT**

(45) Veröffentlichungstag der Patentschrift: 09.01.85

(21) Anmeldenummer: **79103149.5**

(22) Anmeldetag: **27.08.79**

(51) Int. Cl.⁴: **B 01 D 39/08, D 03 D 1/00**

(54) Sackförmiges Filterelement aus einem porösen textilen Flächengebilde.

(30) Priorität: 30.08.78 DE 2837723
15.01.79 DE 2901397

(43) Veröffentlichungstag der Anmeldung:
02.04.80 Patentblatt 80/07

(45) Bekanntmachung des Hinweises auf die
Patenterteilung:
09.01.85 Patentblatt 85/02

(84) Benannte Vertragsstaaten:
AT BE CH DE FR GB IT LU NL SE

(56) Entgegenhaltungen:
CH-A- 288 412
DE-A-2 110 331
DE-A-2 260 386
DE-A-2 403 971
DE-A-2 422 490
DE-A-2 754 305
DE-C- 820 525
DE-U-1 659 777
DE-U-1 697 302

(73) Patentinhaber: Krause, Walter
Am Schalkstein 11
D-7121 Walheim/Württemberg (DE)
(73) Patentinhaber: HOECHST
AKTIENGESELLSCHAFT
Postfach 80 03 20
D-6230 Frankfurt am Main 80 (DE)

(72) Erfinder: Krause, Walter
Am Schalkstein 11
D-7121 Walheim/Württ (DE)
Erfinder: Disselbeck, Dieter
Am Rehsteig 3
D-6232 Bad Soden am Taunus (DE)
Erfinder: Neumann, Gerhard
Johannesallee 16
D-6230 Frankfurt am Main 80 (DE)
Erfinder: Ott, Karl-Heinz
Fasanenstrasse 2
D-6233 Kelkheim (Taunus) (DE)
Erfinder: Strobel, Günther
Am Domherrnwald 7
D-6238 Hofheim am Taunus (DE)
Erfinder: Zalewski, Edwin
Berliner Strasse 12
D-6238 Hofheim am Taunus (DE)

Courier Press, Leamington Spa, England.

(56) References cited:
DE-U-1 746 562
DE-U-1 843 900
FR-A-1 494 141

FIRMENSHRIFT DER VEREINIGTEN
SEIDENWEBEREIEN "Gewebe in der Technik"
Krefeld, Nz. MS 1/646, 19.06.1964
MELLIAND TEXTILBERICHTE, Band 53, 1972,
Winterthur/Schweiz E. SCHELLENBERG
"Herstellung von Drehergeweben", Seiten 271
bis 273

(74) Vertreter: Kockläuner, Reinhard, Dr. et al
HOECHST AKTIENGESELLSCHAFT Zentrale
Patentabteilung Postfach 80 03 20
D-6230 Frankfurt am Main 80 (DE)

## Beschreibung

Zur Trennung von Medien verschiedener Konsistenz z.B. von Abwässern oder Schlämmen ist ein Verfahren bekannt, das durch die Anwendung dreidimensionaler, vorzugsweise sackförmiger Filterelemente mit einem Füllvolumen von 50 bis 5000 1 und darüber gekennzeichnet ist.

Für die Herstellung der großvolumigen Filterelemente hat man bisher ein Polyesterfaser-Gewebe der Einstellung P 2/2, 8,5/8,5 Fäden/cm in Kette und Schuß (sogenannte Panamabindung) verwendet. Das Gewebe hat eine Luftdurchlässigkeit von ca. 580 l/dm² · min bei einer Druckdifferenz von 2 mbar. Es hat seine Eignung insbesondere auf dem Gebiet der Entwässerung kommunaler Schlämme gezeigt. Die vorteilhaften Merkmale des Polyesterfaser-Gewebes bestehen darin, daß es bei einer hohen Festigkeit eine gute Entwässerungsleistung und eine geringe Neigung zum Verstopfen aufweist. Zudem ist das Gewebe preisgünstig in der Herstellung und gewährleistet eine lange Gebrauchsdauer.

Mit anderen Worten müssen die Gewebe darartiger Schlammfilter, um eine optimale Entwässerungswirkung zu erzielen, eine bestimmte Porosität aufweisen, die so zu wählen ist, daß Feststoffteilchen bestimmter Größe mit Sicherheit zurückgehalten, jedoch kleinere Teilchen mit dem Abwasser durch das Gewebe hindurchtreten können. Diese definierte Porosität oder Luftdurchlässigkeit wird nach dem bekannten Stand der Technik dadurch erreicht, daß die Kett- und Schußfäden des Gewebes mit Abstand voneinander angeordnet werden, so daß jeweils zwischen zwei Kett- bzw. zwei Schußfäden ein Abstand von 1 oder 2 Garnstärken verbleibt. Durch diese Anordnung, bei der also die einzelnen Fäden nicht dicht aneinander liegen, ergibt sich nur ein sehr geringer Zusammenhalt des Gewebes bzw. es ist unschwer möglich, die einzelnen Kett- und Schußfäden auseinanderzuziehen, so daß sich eine unterschiedliche Porosität dieses Gewebes ergibt. Nach einer Ausführungsform sind die Schlammfilter schlauchartig zylindrisch ausgebildet und haben an ihrer offenen Beschickungs-Oberseite einen Tragring zum vertikalen Aufhängen des Filters und an ihrer Unterseite eine trichterförmige Verengung. Zwischen dem zylindrischen und dem trichterförmigen Teil ist im allgemeinen ein Spreizring eingefügt. Bei derartigen schlauchartigen Schlammfiltern können aber die Schußfäden, insbesondere im Bereich unterhalb des Tragringes und oberhalb des Spreizringes auseinandergezogen werden also Fadenverschiebungen eintreten, so daß sich in diesen Bereichen größere Durchgänge durch das Gewebe als geplant ergeben. Die Folge ist zuweilen eine ungenügende Filterleistung derartiger Schlammfilter.

Es ist auch versucht worden, die Schußfadeneinstellungen des Gewebes in den angesprochenen kritischen Bereichen dichter als in den übrigen Gewebeteilen des Schlammfilters zu halten. Dadurch ist in diesen Bereichen selbstverständlich der Zusammenhalt des Gewebes besser, ein Auseinanderziehen der Schußfäden daher auch nicht so sehr zu befürchten. Ausgeschlossen kann dies jedoch nicht werden, so daß trotz dieser dichteren Schußfadeneinstellung der erwähnte Nachteil noch nicht behoben ist. Außerdem ist selbstverständlich die Entwässerungsleistung des Schlammfilters in diesen Bereichen durch die dichtere Aufeinanderfolge der Schußfäden und die damit verbundene niedrigere Porosität deutlich geringer.

Es hat sich gezeigt, daß das Gewebe der oben beschriebenen Einstellung zwar im allgemeinen den Anforderungen des Verfahrens genügt; jedoch können bei verschiedenen Medien dadurch Schwierigkeiten auftreten, daß bei der Säuberung der Filterelemente die am Gewebe haftenden Reste von abgetrennten Feststoffen mittels hohem Wasserdruck abgespült werden müssen. Insbesondere bei diesem Vorgang können die oben erwähnten Fadenverschiebungen auftreten, wobei die im sackförmigen Filterelement waagerecht umlaufenden Fäden verdichtet werden und dadurch verhältnismäßig große gewebefreie Zonen gebildet werden. An diesen Stellen kann es zeitweilig zu einem Durchbruch des Feststoffes kommen, so daß das Verfahren nicht immer dauernd einwandfrei funktioniert.

Die Gefahr von Fadenverschiebungen dieser Art besteht insbesondere beim Reinigen der Filterelemente mit Wasserdrücken von mehr als 2 bar, wobei zuweilen mehr als 5 oder gar 10 bar angewendet werden. Es ist daher wünschenswert, dreidimensionale Filterelemente aus textilen Flächengebilden zur Verfügung zu haben, die aufgrund ihrer Konstruktion die definierte Porosität beibehalten, die geschilderten Nachteile vermeiden und das Ablöseverhalten des abgetrennten Feststoffes vom Filtertuch günstig beeinflussen.

Die Verschiebefestigkeit von Geweben kann durch Verkreuzung, Verknüpfung, Umschlingen der Fäden und ähnliche Bindungs- und Konstruktionstechniken erreicht werden. Bevorzugte Konstruktionen, um ein Verschieben der Fäden auszuschließen, sind Drehergewebe und Halbdrehergewebe. Bei diesen Geweben weicht ein Kettfaden von der üblicherweise streng parallelen Lage ab und ist schlingenartig um mindestens einen weiteren in gleicher Richtung laufenden Faden angeordnet. Geeignet sind aber auch Netze, wie geknüpfte oder knotenlose Netze, Gewirke, wie Ketten- oder Nähgewirke, und Strickwaren.

In "Melliand Textilberichte", Band 53, 1972, Seite 271 sind sog. Scheindreher-Gewebe erwähnt, die Stoffe darstellen, bei denen sich durch die Wahl geeigneter Bindungen die Kett- und Schußfäden gruppenweise zusammenschieben und so den netzartigen Charakter des Warengebildes ergeben.

Gegenstand der Erfindung ist ein sackförmiges Filterelement aus einem porösen textilen Flächengewebe aus Synthesefasern zur Abtrennung von festen Stoffen aus Abwasser oder Schlämmen mit Hilfe der Schwerkraft, wobei das textile Flächengebilde eine Luftdurchlässigkeit von über 50, vorzugsweise 200 bis 1500 l/dm² · min bei einem Differenzdruck von 2 mbar aufweist, dadurch gekennzeichnet, daß die einzelnen Fäden des textilen Flächengebildes in Form eines Scheindrehergewebes verschiebefest miteinander verbunden sind, daß die Kett- und Schußfäden aus Filamentgarnen bestehen, in Gruppen von je drei dicht aneinander angeschlagenen Fäden angeordnet sind und die Gruppen von Fäden jeweils einen Abstand von zwei Fädenstärken voneinander besitzen (siehe Fig. 2).

Die Kett- und Schußfäden sind also nicht mehr als einzelne Garnfäden angeordnet, wobei die Fäden mindestens im Abstand einer Garnstärke voneinander liegen, sondern bestehen aus Filamentgarnen die in Gruppen von je drei dicht aneinander angeschlagenen Fäden angeordnet sind, welche Gruppen einen Abstand von zwei Fädenstärken voneinander besitzen (siehe Fig. 2). Dadurch besteht die Möglichkeit einer besonderen Bindung zwischen den Kett- und Schußfäden bzw. einem besseren Zusammenhalt der einzelnen Bindungspunkte bzw. des gesamten Gewebes. So wird die zuvor festgelegte Porosität, die mindestens zwei Fädenstärken zwischen den zusammengefügten Kett- und Schußfäden betragen soll, auch im praktischen Gebrauch erhalten. Diese ist bekannt als Flechtbild 3/7 (siehe Fig. 2).

Wie Versuche gezeigt haben, ist diese Bindung gerade für den Verwendungszweck des Gewebes als Schlammfilter sehr gut geeignet, da sich ein außerordentlich guter Zusammenhalt des Gewebes und damit ein Erhalt der zuvor definierten Porosität ergibt.

Diese Konstruktion und Gewebeeinstellung erlaubt es, die Porengröße bzw. die Luftdurchlässigkeit des textilen Flächengebildes so zu variieren, daß in Anpassung an die Art der jeweils zu trennenden Medien eine Porengröße bzw. Luftdurchlässigkeit gewählt werden kann, die eine optimale Trennleistung bei hoher Feststoffabscheidung und wirtschaftlicher Materialauswahl gewährleistet. Die Verschiebefestigkeit der Gewebeeinstellungen muß so groß sein, daß die Luftdurchlässigkeit auch bei Dauerbelastung gleichmäßig über die ganze Filterfläche erhalten bleibt, ohne daß sich freie Zonen bilden. Dadurch wird vermieden, daß während des Betriebes partiell keine Zonen verhanden sind, bei denen die Luftdurchlässigkeit über 2000, insbesondere über 1500 l/dm$^2 \cdot$min bei einer Druckdifferenz von 2 mbar. beträgt. Die Flächengebilde sollen aus einem solchen Material sein, daß sie die durch das Füllgut erzeugten Kräfte aufnehmen können.

Als Material für die Herstellung der textilen Flächengebilde dienen Filamentgarne aus Synthesefasern (Multi- und/oder Monofilament). Besonders vorteilhaft eignen sich solche aus Fäden aus Polyestern, wie Polyäthylenterephthalat, Polybutylenterephthalat, Poly-1,4-dimethylol-cyclohexanterephtalat bzw. analogen Produkten auf Basis von Isophthalsäure, Polyamiden wie Poly-(hexamethylenadipinsäureamid), Polyhexamethylensebacinsäureamid, Polyundecansäureamid, Polycaprolactam, ferner aus Poly-p-phenylenterephthalamid. Geeignet sind auch Gewebe aus Polyacrylnitril, aus Copolymeren von Acrylnitril und wenigstens einem weiteren Monomeren, deren Acrylnitrilgehalt wenigstens 85% beträgt.

Es hat sich als vorteilhaft erwiesen, für die Filter Garne zu verwenden, deren UV-Beständigkeit wesentlich erhöht ist, z.B. durch Einfärben mit Ruß. Weiterhin ist es vielfach zweckmäßig, die Garne oder die daraus hergestellten textilen Flächengebilde mit einem Bakterizid, Algizid und/oder Fungizid auszurüsten. Insbesondere bei der Reinigung kommunaler Abwässer oder bei der Entwässerung von organischen Schlämmen kann hin und wieder auf der äußeren Filterfläche des dreidimensionalen Filterelements Bakterienbewuchs auftreten, der nach einiger Zeit die Trennleistung beeinträchtigen kann. Durch die genannte Ausrüstung des Filtertuchs mit einem Bakterizid, Algizid und/oder Fungizid wird die Bildung eines biologischen Rasens über längere Zeit vermieden.

Die erfindungsgemäßen sackförmigen Filterelemente sind am unteren Ende zweckmäßig mit einem Verschluß versehen. Sie können auch auf andere Weise so verschlossen sein, daß die abgetrennten Feststoffe an dieser Stelle nicht austreten können, beispeilsweise durch Quetschwerke, Bänder oder Draht. Durch das eingesetzte schiebefeste Gewebe ist auch der ganze Teil oberhalb des Verschlusses voll für die Entwässerungsleistung ausnutzbar, da keine Verschiebungen der einzelnen Fäden auftreten können bzw. das Gewebe an diesen Stellen von vornherein nicht dichter geschlagen ist. Die Filter eignen sich für die verschiedenartigsten Systeme, wie feststoffhaltige Abwässer, Schlämme, z.B. alle Arten von kommunalen Klärschlämmen, wie Frisch- oder Faulschlämme, Industrieschlämme, wie Schlämme aus Schlachthäusern, Molkereinen, Frucht- und Gemüseverwertungsanlagen, im Eisenbahnwesen anfallende Schlämme, Galvanik- und Hydroxydschlämme, Schlämme aus dem feinkeramischen Bereich in der keramischen Industrie, aus Hüttenwerken, Papierschlämme in der Papierindustrie, in der Zuckerindustrie, bei der Span- und Holzfaserplatten-Fabrikation, in Keltereien, bei der Reinigung von Latex-Abwässern und Abwässern aus der Spiegelglasfabrikation bzw. der Spiegelglasschleiferei, Gülle; insbesondere auch für solche, deren Feststoffe hartnäckig am Gewebe haften, wie Belebtschlämme u.a..

Bei Einsatz der sackförmigen Filterelemente ist es vielfach zweckmäßig, der Filtriereinrichtung ein Medium zuzuführen, das mit Flockungsmitteln d.h. mit Fällungsmitteln und/oder Flockungshilfsmittel behandelt ist. Als solche seien z.B. Fällungsmittel wie Aluminiumchlorid, Aluminiumsulfat, Eisenchlorid und/oder Calciumhydroxyd genannt. Diese werden vorteilhaft mit Flockungshilfsmitteln im engeren Sinne, wie Polyacrylat- und/oder Polyacrylamid-Typen kombiniert.

Beispiel 1

In der Zeichnung ist ein Ausführungsbeispiel schematisch dargestellt, und zwar zeigen:

Fig. 1 einen Schlammfilter in perspektivischer Ansicht,

Fig. 2 eine Gewebe-Patrone und

Fig. 3 die Ansicht des Schlammfilter-Gewebes.

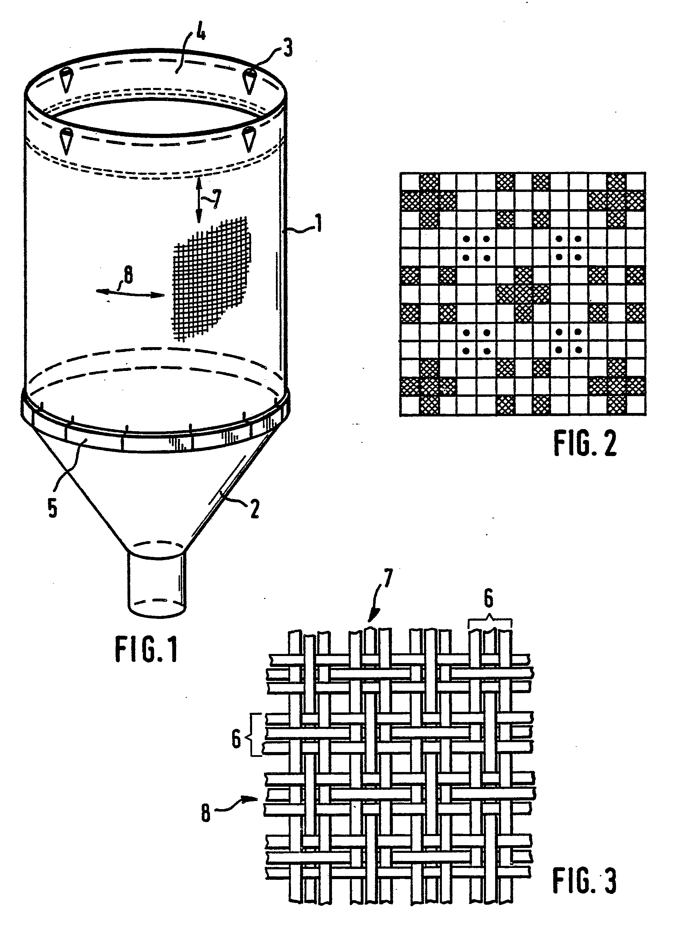

Der in Fig.1 gezeigte Schlammfilter besteht aus einem zylindrischen Teil 1, an den sich ein trichterförmiger Teil 2 anschließt. Das Gewebe des Filters ist an der Beschickungs-Oberseite durch Umnähen zu einer mit Aufhängeöffnungen versehenen Schlaufe 4 ausgebildet, in die ein Tragring 3 eingearbeitet ist.

Zwischen dem zylindrischen Teil 1 und dem trichterförmigen Teil 2 befindet sich ein an der Außenseite des Schlauchfilters befestigter Spreizring 5, der dafür sorgt, daß sich die Form des schlauchartigen Schlammfilters an dieser Stelle nicht unter Belastung verändert. Am unteren Ende des trichterförmigen Teils 2 befindet sich ein Verschluß (nicht dargestellt). Der Schlammfilter besteht aus einem Gewebe mit definierter Porosität. Das aus Kette 7 und Schuß gebildete Gewebe ist so gewoben, daß die Kett- und Schußfäden in Gruppen von je drei dicht aneinander angeschlagenen Fäden angeordnet sind welche Gruppen jeweils einen Abstand von zwei Filamentgarnstärken voneinander besitzen. Die Patrone zum Weben diese Gewebes zeigt Fig. 2, die Ansicht auf das Gewebe in vergrößerndem Maßstabe Fig. 3. Aus beiden Darstellungen ist ersichtlich, daß zwischen Kette und Schuß annähernd quadratische Poren verbleiben, durch die das Filtrat abfließen kann. Durch die besondere Art der Bindung wird erreicht, daß diese definierten Abstände zwischen Kette und Schuß stets beibehalten werden, die zuvor festgelegte definierte Porosität des Gewebes sich also nicht ändert.

Beispiel 2

Bestimmung der Luftdurchlässigkeit der Filtermedien

Von drei Polyesterfaser-Geweben(Polyethylenterephthalat) wurde der Durchflußwiderstand mittels Luft nach DIN 53887 gemessen.

Die für die Prüfung eingesetzten Gewebe (im folgenden als Gewebe I, II und III bezeichnet) besitzen folgende Kenndaten:

|  | Bindung | Titer [dtex] | Einstellung [Fäden/cm] | Gewicht [g/m²] |
|---|---|---|---|---|
| Gewebe I | Klemm (vgl. Fig. 3) | 2200 | Kette 9,4 Schuß 12 | 510 |
| Gewebe II | Dreher | 1670 2200 | Kette 10,2 Schuß 5,6 | 345 |
| Gewebe III (Vergleich) | Panama | 2200 | Kette 8,5 Schuß 8,5 | 410 |

Die Prüfeinrichtung bestand aus einer Einspannvorrichtung, Sauglüfter, Luftdurchflußmesser, Regeleinrichtung und Differenzdruckmesser. Bei einem Differenzdruck von 2 mbar wurden unter Verwendung dieser Gewebe folgende Werte ermittelt:

Gewebe I: 340 l/dm² min

Gewebe II: 1000 l/dm² min

Gewebe III: 580 l/dm² min (Vergleich)

Bestimmung der Filtrationseigenschaften der Filtermedien

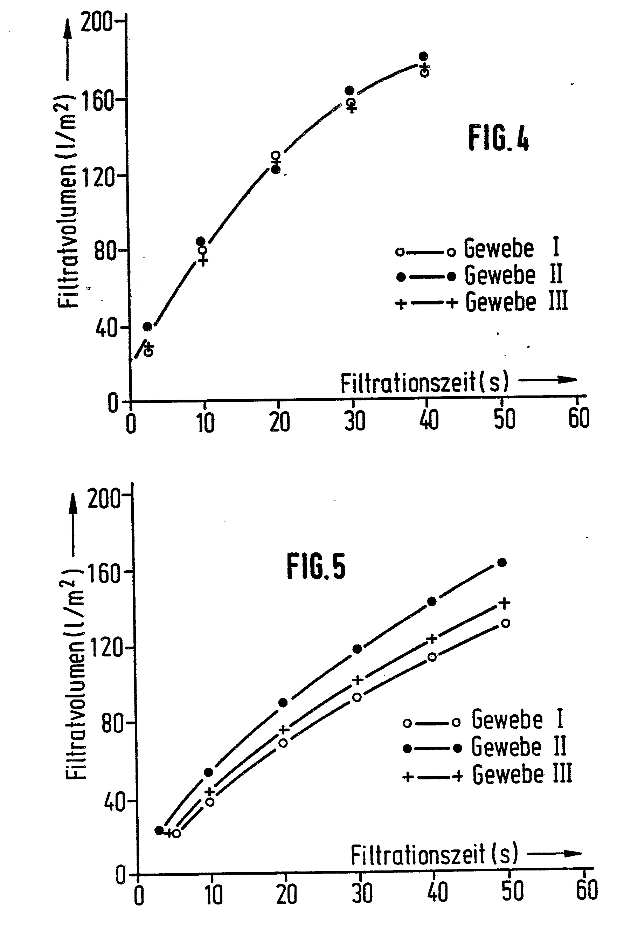

Bei einem Filtrationsdruck von 0,3 bar wurde auf einer Filterapparatur, bestehend aus einem Druckfilter mit einer Fläche von 0,01 m², Filterbehälter, Mikroprozessor (Drucker- und Datenspeicher), einer Druckmaß- und Regelautomatik sowie einer elektrischen Waage mit angeschlossenem Schreiber ein Misch- bzw. Faulschlamm mit einer Feststoffkonzentration von 0,6 bzw. 3,1 Gew.% eingesetzt. Der Schlamm wurde mit einem handelsüblichen Flockungsmittel, d.h. einem organischen Polyelektrolyt auf Basis eines Polyacrylamides vorbehandelt. Die Versuchsergebnisse sind in Fig. 4 und 5 dargestellt, die das Filtratvolumen in Abhängigkeit von der Filtrationszeit bei einem Filtrationsdruck von 0,3 bar darstellen. Aus den Filtrat-Zeit-Kurven geht hervor, daß die eingesetzten Filtermedien bei Mischschlamm (Fig. 4) keinen und bei Faulschlamm (Fig. 5) nur einen geringen Einfluß auf die Filterleistung hatten, die 18 bzw. 12—14 m³/m²h Schlamm betrug. Der Trockenstoffgehalt des Filterkuchens lag bei einer Kuchendicke von 10 bzw. 45 mm zwischen 10 und 20 Gew.%, wobei kein Unterschied zwischen den Geweben festgestellt werden konnte.

Der Grad der Feststoffabscheidung aus den Schlämmen wurde durch eine optische Vergleichsmessung der geklärten Abwässer mit vollentsalztem Wasser (=0% Lichtabsorption) in einem lichtelektrischen Kolorimeter geprüft. Das Filtrat des Gewebes III (Vergleich) zeigte eine Lichtabsorption von knapp 15%, während die Filtrate der Gewebe I bzw. II mit 12 bzw. 18% geringfügig niedriger oder höher lagen. Der Grad der Feststoffabscheidung ergab somit bei den verschiedenen Filtermedien keine wesentlichen Unterschiede. Bei mehrmaligen Filtrieren auf das gleiche gereinigte Gewebe wurde in keinem Fall eine Verstopfung der Öffnungen der Gewebe beobachtet.

Der Filterkuchen löste sich bei allen Versuchen ausgezeichnet von allen drei Filtermedien.

Prüfung der Fadenverschiebung der Filtermedien

Nach Abschluß der Filtrationsversuche wurden die untersuchten Filtermedien (Gewebe I bis III) eingespannt und mittels eines Heißwasserhochdruckstrahlers gereinigt. Der Druck an der Düse betrug bei einem Abstand von 30 cm zwischen Sprühdüse und Filtermedium 15 bar. Während bei den Geweben I und II keine Fadenverschiebungen eintraten und auch die Werte für die Luftdurchlässigkeit nicht verändert wurden, zeigte Gewebe III (Vergleich) starke Verschiebungen; der Luftdurchlässigkeitswert stieg auf 1060 l/dm² · min.

## Patentanspruch

Sackförmiges Filterelement aus einem porösen textilen Flächengewebe aus Synthesefasern zur Abtrennung von festen Stoffen aus Abwasser oder Schlämmen mit Hilfe der Schwerkraft, wobei das textile Flächengebilde eine Luftdurchlässigkeit von über 50, vorzugsweise 200 bis 1500 l/dm² · min bei einem Differenzdruck von 2 mbar aufweist, dadurch gekennzeichnet, daß die einzelnen Fäden des textilen Flächengebildes in Form eines Scheindrehergewebes verschiebefest miteinander verbunden sind, daß die Kett- und Schußfäden (7, 8) aus Filamentgarnen (6) bestehen, in Gruppen von je drei dicht aneinander angeschlagenen Fäden angeordnet sind und die Gruppen von Fäden jeweils einen Abstand von zwei Fädenstärken voneinander besitzen.

## Claim

Bag-shaped filter element of a porous textile fabric of synthetic fibres for a separation of solid material from waste water or sludges by means of gravity, wherein the textile fabric has an air permeability of more than 50, preferably 200 to 1500 l/dm² · min at a pressure difference of 2 mbar, characterized in that the individual threads of the textile fabric are bound to each other in an unshiftable manner in the form of a mock leno weave, that the warp and weft threads (7, 8) consist of filament yarns (6), are arranged in groups of three filament yarns each being tightly beaten up against each other and that the groups of threads have a distance to each other corresponding to the thickness of two filament yarns.

## Revendication

Elément filtrant en forme de sca, fait d'un tissu textile plan et poreux de fibres synthétiques, pour séparer des matières solides d'eaux usées ou de boues à l'aide de la gravité, le matériau textile plan ayant une perméabilité à l'air de plus de 50, de préférence de 200 à 1500 l/dm² · min sous une pression différentielle de 2 mbar, caractérisé en ce que les différents fils du matériau textile plan sont liés entre eux sans pouvoir se déplacer, sous la forme d'un tissu en fausse gaze, que les fils de chaîne et de trame (7, 8) sont des fils filamentaires (6) disposés en groupes de chacun trois fils serrés les uns contre les autres, et que les groupes de fils sont mutuellement espacés chaque fois de deux épaisseurs de fil.

0 009 141

FIG.1

FIG. 2

FIG. 3

0 009 141

FIG.4

Filtratvolumen (l/m²) — Filtrationszeit(s) →

o——o Gewebe I
●——● Gewebe II
+——+ Gewebe III

FIG.5

Filtratvolumen(l/m²) — Filtrationszeit(s) →

o——o Gewebe I
●——● Gewebe II
+——+ Gewebe III

2